# DEMANDE DE BREVET EUROPEEN

(11) **EP 2 792 900 A1**
(43) Date de publication de la demande: **22.10.2014**
(21) Numéro de dépôt: 14165511.8
(22) Date de dépôt: 22.04.2014
(51) Int. Cl.: F16F 1/32

(54) **Dispositif de ressort**

(30) Priorité: 19.04.2013 FR 1353621
(71) Demandeur: Borrelly, 69440 Saint-Laurent-d'Agny (FR)
(72) Inventeur: Borrelly, Dominique, 69440 St Laurent d'Agny (FR)
(74) Mandataire: Myon, Gérard Jean-Pierre

(57) **Abrégé**

Ce dispositif de ressort (10) comprend une structure externe (12), une structure interne (14) et une structure intermédiaire (19) qui comprend des bras (20) reliant la structure externe et la structure interne et qui s'étendent chacun selon un axe longitudinal (X20). La structure interne (14) et la structure externe (12) s'étendant selon des plans distincts, en étant disposées autour d'un axe central (Z10). Chaque bras comprend au moins une portion intermédiaire (24), caractérisé en ce que chaque portion intermédiaire (24) de chaque bras (20) est cintrée et présente une concavité au moins dans un plan (III) perpendiculaire à un axe longitudinal (X20) du bras.

## Description

La présente invention concerne un dispositif de ressort propre à emmagasiner une quantité d'énergie et à la restituer.

Ce dispositif de ressort, lorsqu'il empilé en série par exemple, peut être par exemple utilisé dans le domaine de l'aéronautique dans le cadre de système d'ouverture de portes d'aéronefs qui nécessitent des ressorts les plus légers possibles, ayant de grands débattements et possédant une grande énergie potentielle.

Un enjeu persistant pour de tels dispositifs de ressort est d'utiliser des sollicitations pures de type traction et compression pour lesquels le déplacement autorisé est faible. Ainsi, il est connu d'utiliser des rondelles dites « belleville » ou la sollicitation de traction compression est majoritaire, mais où il réside une proportion de flexion dans la pièce suffisamment grande pour rendre l'efficacité de ce type de rondelles insuffisante dans certaines applications, telles que celles citées ci-dessus. Ces rondelles dites « belleville » transforment des petites déformations en grand déplacement, ce qui est recherché dans le dispositif de ressort objet de l'invention. Par contre, la répartition des contraintes dans une rondelle « belleville » n'est pas uniforme, ce qui nuit à son efficacité.

Il est également connu de FR-A-2 976 993 d'utiliser un dispositif de ressort comprenant deux zones opposées destinées à être soumises à des sollicitations et entre lesquelles se trouvent une partie intermédiaire comprenant une structure en treillis, dont un premier segment est sollicité en compression, tandis qu'un deuxième segment est sollicité en traction. Ce dispositif de ressort utilise des modes de sollicitation en traction et en compression. Néanmoins, ce dispositif de ressort est limité par le flambage du ou des segments sollicités en compression, ce qui nuit à ses performances et diminue la quantité d'énergie qu'il est propre à restituer.

C'est à ces inconvénients qu'entend plus particulièrement remédier l'invention en proposant un nouveau dispositif de ressort utilisant des modes de sollicitation en traction ou en compression, résistant au flambage et propre à emmagasiner et à restituer une grande quantité d'énergie.

A cet effet, l'invention concerne un dispositif de ressort comprenant une structure externe, une structure interne et une structure intermédiaire comprenant des bras reliant la structure externe et la structure interne et s'étendant chacun selon un axe longitudinal, la structure interne et la structure externe s'étendant selon des plans distincts et étant disposées autour d'un axe central, chaque bras comprenant au moins une portion intermédiaire. Conformément à l'invention, chaque portion intermédiaire de chaque bras est cintrée et présente une concavité au moins dans un plan perpendiculaire à un axe longitudinal du bras.

Grâce à l'invention, la forme cintrée de la portion intermédiaire, c'est-à-dire plus globalement du bras, lui permet de résister efficacement à des sollicitations en compression, sans risque de flambage. En outre, la géométrie du dispositif de ressort permet d'utiliser, au sein de celui-ci, uniquement des sollicitations en compression et en traction, ce qui améliore l'efficacité du dispositif de ressort.

Selon des aspects avantageux mais non obligatoires de l'invention, un tel dispositif de ressort peut incorporer une ou plusieurs des caractéristiques suivantes, prises dans toute combinaison techniquement admissible :
- Dans le plan perpendiculaire à son axe longitudinal, chaque portion intermédiaire de chaque bras présente une concavité tournée vers le plan dans lequel s'étend la structure externe.
- Un rapport ayant comme dénominateur une largeur de la portion intermédiaire d'un bras, mesurée perpendiculairement à son axe longitudinal et parallèlement au plan dans lequel s'étend la structure externe et, comme numérateur, une distance maximale, mesurée suivant un axe perpendiculaire à l'axe longitudinal et au plan dans lequel s'étend la structure externe, entre d'une part, une droite le long de laquelle est mesurée la largeur et, d'autre part, un point appartenant à la portion intermédiaire, est compris entre 0,03 et 0,4 de préférence entre 0,05 et 0,1.
- L'épaisseur moyenne des parties constitutives du dispositif de ressort mesurée globalement parallèlement à l'axe central est inférieure à la largeur des bras mesurée perpendiculairement à chaque axe longitudinal et parallèlement au plan dans lequel s'étend la structure externe, et à la largeur de la structure externe mesurée globalement radialement à l'axe central.
- La structure interne comprend une partie centrale de révolution, centrée sur l'axe central, reliée à la structure externe par l'intermédiaire des bras, tandis que la partie centrale est cintrée, radialement à l'axe central, avec sa concavité tournée vers le plan dans lequel s'étend la structure externe.
- La structure interne comprend une partie centrale, reliée à la structure externe par l'intermédiaire des bras, la partie centrale comprend plusieurs segments et a une forme globalement cylindrique, chaque segment étant courbe, parallèlement et perpendiculairement à un axe le traversant suivant sont côté présentant la plus grande longueur, avec sa concavité tournée vers le plan dans lequel s'étend la structure externe.
- L'épaisseur moyenne des parties constitutives du dispositif de ressort mesurée globalement parallèlement à l'axe central est inférieure à la largeur de la partie centrale mesurée globalement radialement à l'axe central.
- Chaque bras est courbe parallèlement à son axe longitudinal, avec sa concavité tournée vers le plan dans lequel s'étend la structure externe.
- La structure interne comprend des organes de fixation, et la structure externe comprend des moyens de fixation, de manière à ce que plusieurs dispositifs de ressort puissent être assemblés les uns aux autres avec leurs axes centraux confondus.

L'invention a également pour objet un procédé de fabrication d'un dispositif de ressort tel que mentionné ci-dessus, par usinage, estampage, matriçage et/ou emboutissage d'une plaque d'acier à ressort ou tissage, moulage, injection et/ou usinage de matériau composite.

L'invention sera mieux comprise et d'autres avantages de celle-ci apparaitront plus clairement à la lumière de la description qui va suivre de cinq modes de réalisation d'un dispositif de ressort, conformes à son principe donnée seulement à titre d'exemple et faite en référence aux dessins annexés dans lesquels :
- la figure 1 est une vue en perspective d'un dispositif de ressort selon un premier mode de réalisation de l'invention,
- la figure 2 est une coupe en perspective, suivant un plan II à la figure 1, du dispositif de ressort de la figure 1,
- la figure 3 est une coupe en perspective, suivant un plan III à la figure 1, du dispositif de ressort des figures 1 et 2,
- la figure 4 est une vue de dessus d'un dispositif de ressort conforme à un deuxième mode de réalisation de l'invention,
- la figure 5 est une coupe, suivant la ligne V-V à la figure 4, du dispositif de ressort de la figure 5,
- la figure 6 est une coupe, suivant la ligne VI-VI à la figure 4, du dispositif de ressort des figures 5 et 6,
- la figure 7 est une section selon la ligne VII-VII à la figure 4,
- la figure 8 est une vue en perspective d'un dispositif de ressort conforme à un troisième mode de réalisation de l'invention,
- la figure 9 est une vue en perspective d'un dispositif de ressort conforme à un quatrième mode de réalisation de l'invention,
- la figure 10 est une coupe, suivant un plan X à la figure 9, du dispositif de ressort de la figure 9,
- la figure 11 est une vue analogue à la figure 7 pour un dispositif de ressort conforme à un cinquième mode de réalisation de l'invention.

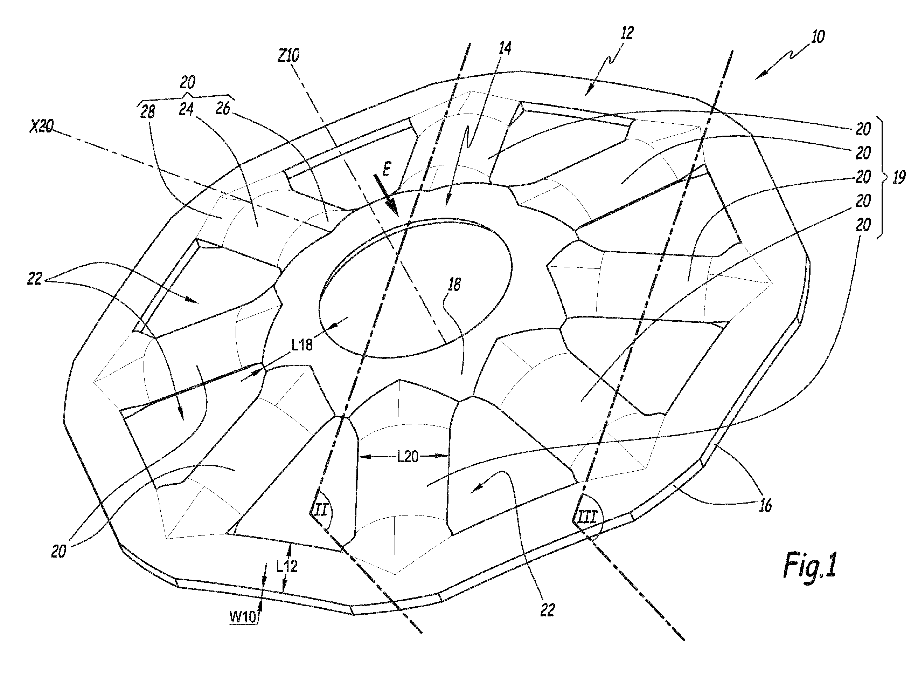

A la figure 1, est représenté un dispositif de ressort 10 comprenant une structure externe 12 et une structure interne 14, disposées autour d'un axe central Z10 du dispositif 10.

La distance radiale, par rapport à l'axe Z10, de la structure interne 14 est inférieure à la distance radiale, par rapport à cet axe, de la structure externe 12. La structure externe 12 et la structure interne 14 sont coaxiales et s'étendent respectivement dans un premier plan P1 et dans un deuxième plan P2, distincts. La structure interne 14 et la structure externe 12 constituent deux zones destinées à être soumises à des sollicitations. En pratique, les plans P1 et P2 sont perpendiculaires à l'axe Z10 et passent respectivement par le milieu de la projection des structures 12 et 14 sur cet axe. En d'autres termes, les structures 12 et 14 sont globalement planes et s'étendent de part et d'autre des plans P1 et P2, respectivement, le long de l'axe Z10.

La structure externe 12 est de forme polygonale et comprend une succession de segment 16.

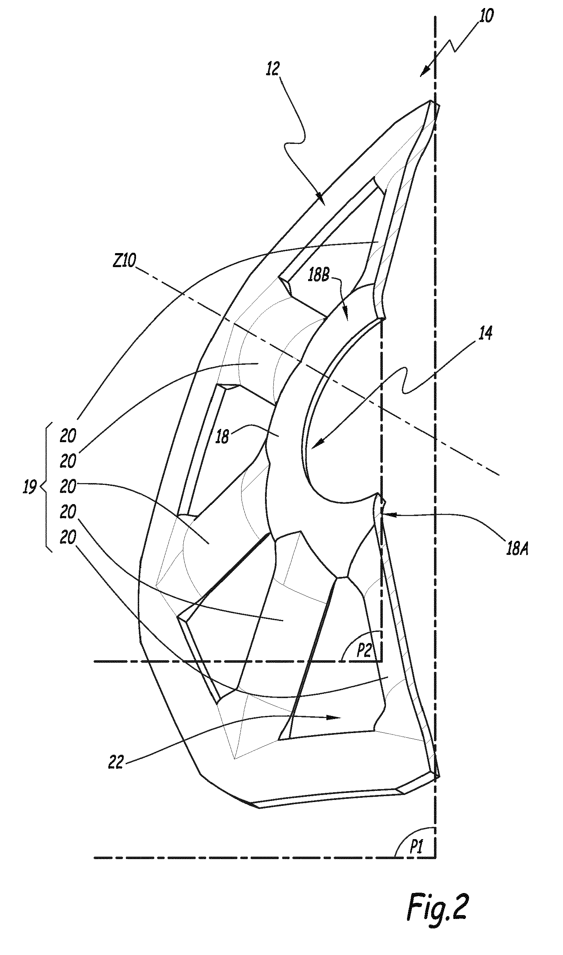

La structure interne 14 comprend un anneau central 18 centré sur l'axe Z10. L'anneau 18 est bombé ou cintré selon une direction parallèle à l'axe Z10. En d'autres termes, une section de l'anneau 18 prise dans un plan radial à l'axe Z10 est courbe, comme visible à la figure 2. Plus précisément, l'anneau 18 présente une surface concave 18A tournée vers le plan P1 et une surface convexe 18B, tournée à l'opposé du plan P1. L'anneau 18 présente une épaisseur constante.

En variante, l'épaisseur de l'anneau 18 n'est pas constante mais varie.

Une structure intermédiaire 19 s'étend radialement entre les structures 12 et 14. Cette structure intermédiaire 19 est formée de huit bras 20 qui s'étendent chacun selon un axe X20 radial à l'axe Z10 et incliné par rapport à celui-ci.

Les bras 20 sont distants les uns des autres, de sorte qu'ils définissent, entre eux et entre la structure interne 14 et la structure externe 12, des évidements traversants 22.

Par ailleurs, chaque bras 20 comprend une portion intermédiaire disposée entre une première extrémité 26, proximale par rapport à l'axe Z10, et une deuxième extrémité 28, distale par rapport à l'axe Z10. L'extrémité 26 d'un bras 20 relie sa portion intermédiaire 24 à l'anneau 18 de la structure 14, alors que son extrémité 28 relie cette portion aux segments 16 de la structure 12.

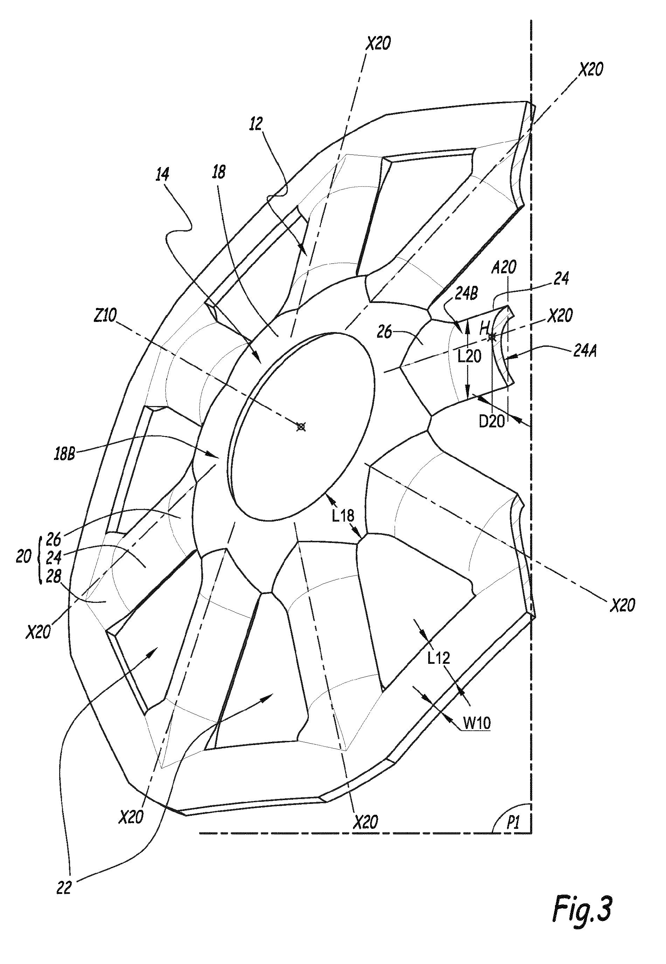

La portion intermédiaire 24 de chaque bras 20 est courbe, c'est-à-dire cintrée, dans un plan III perpendiculaire à l'axe longitudinal X20 de ce bras 20, avec sa concavité tournée vers le premier plan P1. Ce plan III est celui de la coupe de la figure 3.

En d'autres termes, chaque portion 24 est délimitée par une surface concave 24A tournée vers le plan P1 et une surface convexe 24B tournée à l'opposé du plan P1. Chaque portion intermédiaire 24 présente une épaisseur constante.

En variante, l'épaisseur de chaque portion intermédiaire 24 n'est pas constante mais varie.

La structure interne 14 est destinée à être soumise à un effort E parallèle à l'axe central Z10 et dirigé vers le plan P1, tandis que la structure externe 14 est immobilisée suivant l'axe Z10. Le dispositif de ressort 10 présente, en outre, une forme globalement tronconique et l'effort E a tendance à le remettre à plat, avec pour conséquence une sollicitation en compression des structures interne 14 et intermédiaire 19 et une sollicitation en traction des segments 16 de la structure externe 12.

On note L20 la largeur de la portion intermédiaire 24 d'un bras 20, mesurée perpendiculairement à son axe longitudinal X20 et parallèlement au premier plan P1. On note A20 une droite reliant les bords latéraux d'une portion 24 entre lesquels est définie la largeur L20. On note D20 une distance maximale mesurée, perpendiculairement à l'axe X20 et parallèlement à l'axe Z10, entre d'une part, la droite A20 et, d'autre part, un point H appartenant à la surface 24B et le plus éloigné de la droite A20.

La distance D20 représente la hauteur de courbure d'une portion 24.

Ainsi, la courbure d'un bras 20 est définie par un rapport R20 ayant comme numérateur la distance D20 et comme dénominateur la largeur L20.

On a la relation R20 = D20/L20.

On note W10 l'épaisseur moyenne des parties constitutives du dispositif de ressort 10, mesurée parallèlement à l'axe central Z10. Cette épaisseur W10 est inférieure à la largeur L20. On note L12 la largeur maximale de la structure externe 12, mesurée radialement à l'axe Z10. L'épaisseur moyenne W10 est inférieure à la largeur L12. On note L18 la largeur maximale de l'anneau 18, mesurée radialement à l'axe Z10. De même, l'épaisseur moyenne W10 est inférieure à la largeur L18.

Le fait que l'anneau 18 est bombé, courbe ou cintré selon une direction radiale à l'axe Z10 lui permet de résister efficacement à une sollicitation en compression parallèle à l'axe Z10.

En variante, le nombre de bras 20 du dispositif de ressort 10 est différent de huit.

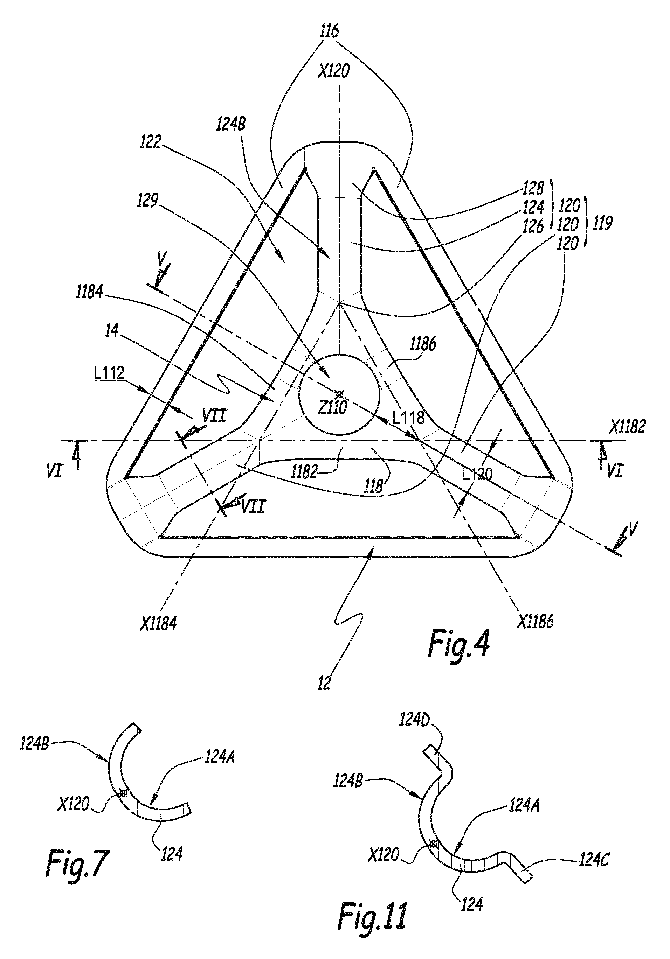

Aux figures 4 à 6, un deuxième dispositif de ressort 110 est représenté, dans lequel les éléments semblables à ceux du premier mode de réalisation portent les même références augmentées de 100. Dans la suite, essentiellement les différences entre le premier et le deuxième mode de réalisation sont décrites. Le dispositif de ressort 110 comprend une structure externe 112, et une structure interne 114, centrées autour d'un axe central Z110. La structure externe 112 a une forme globalement triangulaire et comprend trois segments 116 globalement rectilignes. De manière analogue à ce qui a été décrit pour le premier mode de réalisation, les structures 112 et 114 s'étendent respectivement dans un premier plan P101 et dans un deuxième plan P102 distincts, sachant qu'en pratique les structures 12 et 14 s'étendent de part et d'autre des plans P101 et P102, respectivement, le long de l'axe Z10.

De plus, la structure interne 114 comprend une partie centrale 118 centrée sur l'axe Z110 et reliée à la structure externe 112 par une structure intermédiaire 119 comprenant trois bras 120, qui s'étendent chacun selon un axe X120 radial à l'axe Z110 et incliné par rapport à celui-ci.

Les bras 120 sont distants les uns des autres, de sorte qu'ils définissent entre eux et entre la partie centrale 118 et la structure externe 112, des évidements traversants 122.

Chaque bras 120 comprend une portion intermédiaire 124 disposée entre une première extrémité 126, proximale par rapport à l'axe Z110, et une deuxième extrémité 128, distale par rapport à l'axe Z110. L'extrémité 126 d'un bras 120 relie sa portion intermédiaire 124 à la partie centrale 118, alors que son extrémité 128 relie cette portion 124 aux segments 116.

La portion intermédiaire 124 de chaque bras 120 est courbe, c'est-à-dire cintrée ou bombée, suivant un plan perpendiculaire à l'axe X120 de ce bras 120, avec sa concavité tournée vers le premier plan P101. Ce plan est celui de la section de la figure 7.

En d'autres termes, chaque portion 124 est délimitée par une surface concave 124A tournée vers le plan P101 et une surface convexe 124B tournée à l'opposé du plan P101. Chaque portion intermédiaire 124 présente une épaisseur constante.

En variante, l'épaisseur de chaque portion intermédiaire 124 n'est pas constante mais varie.

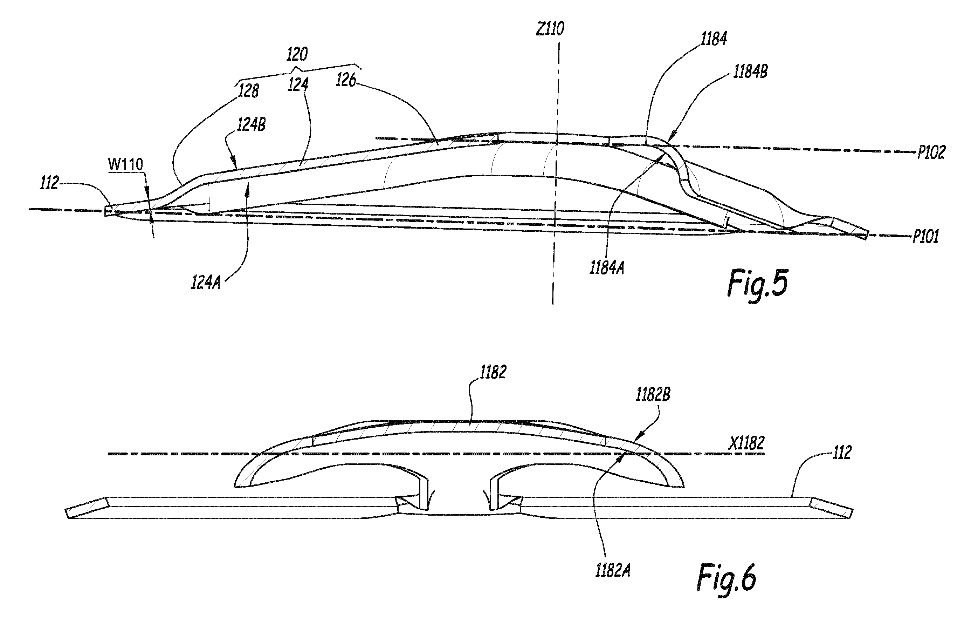

La partie centrale 118 comprend, en son centre, un évidemment traversant 129, dont le bord est en forme de cercle et à partir duquel elle s'étend en allant vers le premier plan P101. La partie centrale 118 est formée de trois segments 1182, 1184, 1186 qui relient les bras 120 de manière à que ces trois segments 1182, 1184, 1186 forment, sur la périphérie extérieure de la partie centrale, globalement un triangle. Chaque segment 1182, 1184, 1186 est courbe perpendiculairement à un axe central X1182, X1184, X1186 qui le traverse, parallèlement à son côté présentant la plus grande longueur, avec sa concavité tournée vers le premier plan P101. Ceci est visible pour le segment 1184 à la figure 5. En outre, comme visible à la figure 6 pour le segment 1182, chaque segment 1182, 1184 ou 1186 est courbe le long de son axe central X1182, X1184 ou X1186. Ainsi, chaque segment 1182, 1184, 1186 est courbe suivant un plan parallèle et suivant un plan perpendiculaire à son axe central X1182, X1184, X1186.

En d'autres termes, le segment 1184 est délimité par une surface concave 1184A, suivant un plan perpendiculaire à son axe X1184, tournée vers le plan P101, et une surface convexe 1184B, suivant un plan perpendiculaire à son axe X1184, tournée à l'opposé du plan P101. Il en est de même pour les segments 1182 et 1186 avec les axes X1182 et X1186. Les surfaces concaves 1182A et convexes 1182B du segment 1182 sont visibles à la figure 6.

Le dispositif de ressort 110 à donc une partie centrale 118 courbe et cintrée qui présente une double concavité.

De manière analogue à ce qui a été décrit pour le dispositif de ressort des figures 1 à 4, l'épaisseur moyenne W110 des parties constitutives du dispositif de ressort 110 est inférieure respectivement à la largeur L120, de la portion intermédiaire 124, à la largeur maximale L112 de la structure externe 112, et à la largeur maximale L118 de la partie centrale 118.

En variante, le nombre de bras 120 du dispositif de ressort 110 est différent de trois. Selon une autre variante, le nombre de segments 1181, 1184, 1186, formant la partie centrale 118, est différent de trois.

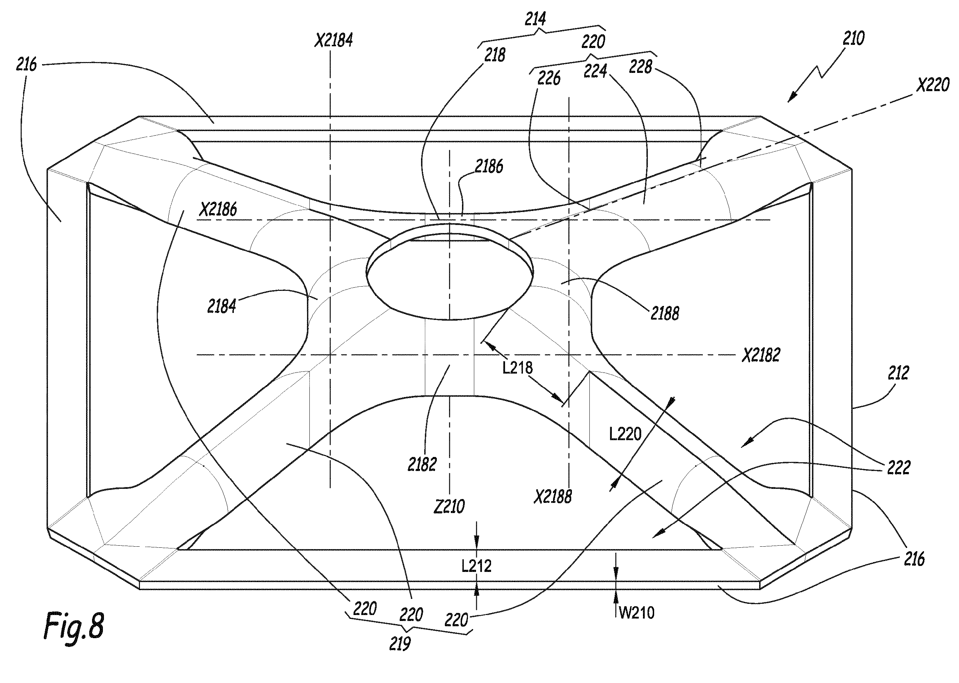

A la figure 8, un troisième mode de réalisation d'un dispositif de ressort 210 est représenté. Ce dispositif de ressort 210 a un fonctionnement similaire au dispositif de ressort 110 et globalement les mêmes caractéristiques. Les parties constitutives du dispositif de ressort 210 portent mêmes références que celles du dispositif de ressort 110, augmentées de 100. La différence entre le dispositif de ressort 210 et le dispositif de ressort 110 est une différence de forme globale de la structure interne et de la structure externe. Plus précisément, la structure externe 212 du dispositif de ressort 210 est de forme globalement rectangulaire et comprend quatre segments 216. En outre, le dispositif de ressort 210 comprend une structure interne 214. De manière analogue à ce qui a été décrit pour les deux modes de réalisation précédents les structures 212 et 214 s'étendent respectivement dans un premier plan et dans un deuxième plan distincts, non représentés à la figure 8, et sont coaxiales par rapport à un axe central Z210. En pratique, les structures 12 et 14 s'étendent de part et d'autre des premier et deuxième plans respectivement.

De plus, la structure interne 214 comprend une partie centrale 218 tandis qu'une structure intermédiaire 219 s'étend entre les structures 212 et 214 et comprend quatre bras 220 qui s'étendent chacun selon un axe X220 radial à l'axe Z210 et incliné par rapport à celui-ci. De manière analogue à ce qui a été décrit pour les modes de réalisation précédents, chaque bras 220 comprend une portion intermédiaire 224 et deux extrémités 226 et 228.

Les bras 220 sont distants les uns des autres de sorte qu'ils définissent entre eux et entre la partie centrale 218 et la structure externe 212 des évidements 222.

Les formes courbes et cintrées de la partie centrale 218 et des bras 220 sont globalement similaire aux formes courbes et cintrées du deuxième mode de réalisation de la partie centrale 118 et des bras 120 et offrent les mêmes avantages. Chaque portion intermédiaire 224 est cintrée et courbe suivant un plan perpendiculaire à l'axe longitudinal X220 du bras 220 auquel elle appartient. La partie centrale 218 est différente de la partie centrale 118 en ce qu'elle est formée de quatre segments 2182, 2184, 2186, 2188 qui relient les bras 220, de manière à ce que ces quatre segments 2182, 2184, 2186, 2188 forment sur la périphérie extérieure de la partie centrale 218, globalement un rectangle. Ainsi chaque segment 2182, 2184, 2186, 2188 est courbe suivant un plan parallèle et suivant un plan perpendiculaire à son axe X2182, X2184, X2186, X2188 qui le traverse parallèlement à son côté présentant la plus grande longueur, avec sa concavité tournée vers le premier plan.

La forme en double concavité de la partie centrale 118, 218 des dispositifs de ressort 110, 210 améliore la tenue en compression 118, 218. Cette forme en double concavité s'adapte à la transmission de la sollicitation de compression.

Les évidements 22, 122, 222, permettent de donner à la pièce une souplesse garantissant une participation très faible de la flexion comme mode de sollicitation. Ainsi, les parties constitutives des ressorts 10, 110 et 210 sont sollicitées principalement en traction ou compression pure.

En variante, le nombre de bras 220 du dispositif de ressort 210 est différent de quatre. Selon une autre variante, le nombre de segments 2181, 2184, 2186, 2188, formant la partie centrale 218, est différent de quatre.

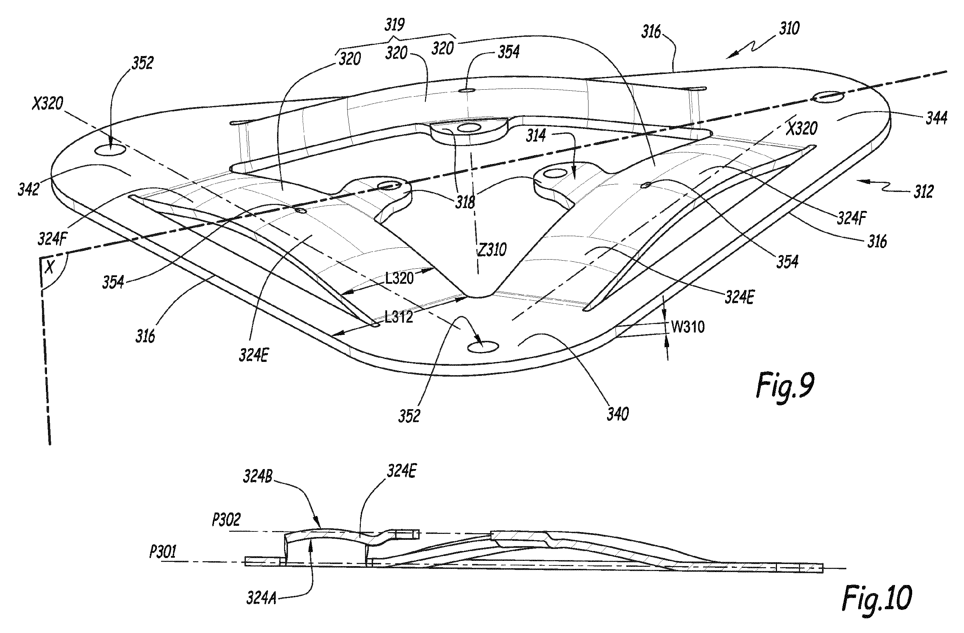

Les figures 9 et 10 représentent un quatrième mode de réalisation et montrent un dispositif de ressort 310 qui comprend une structure externe 312 de forme globalement triangulaire et une structure interne 314. La structure externe 312 comprend trois segments 316 et est disposé comme la structure interne 314 autour d'un axe central Z310. Comme présentée pour les modes de réalisation précédents, la structure externe 312 et la structure interne 314 sont coaxiales et s'étendent respectivement dans un premier plan P301 et un deuxième plan P302 distincts. En pratique, les structures 12 et 14 s'étendent de part et d'autre des plans P301 et P302 respectivement. Les segments 316 sont agencées les uns avec les autres afin de former une structure externe 312 de forme triangulaire comprenant trois sommet 340, 342, 344.

La structure interne 314 comprend trois organes de fixation 318. Une structure intermédiaire 319 s'étend entre les structures 312 et 314. Cette structure intermédiaire 319 est formée de trois bras 320 qui s'étendent chacun globalement selon un axe X320 parallèle à chaque segment 316. Par ailleurs, chaque bras 320 relie deux sommets 340, 342, 344 entre eux. Chaque bras comprend, d'une part, une première portion intermédiaire 324E disposée entre une première extrémité 326 et une zone 354, la plus éloignée du plan P301 suivant l'axe Z310 et, d'autre part, une deuxième portion intermédiaire 324F disposée entre une deuxième extrémité 328 et la zone 354. L'extrémité 326 d'un bras 320 relie sa première portion intermédiaire 324E à un premier sommet 340, 342, 344, alors que son extrémité 328 relie sa deuxième portion intermédiaire 324F à un deuxième sommet opposé au premier sommet.

Les zones 354 constituent les sommets des bras 320 par rapport au plan P301 et sont alignées, radialement par rapport à l'axe Z31 0, chacune avec un organe de fixation 318.

Chaque bras 320 comprend deux portions intermédiaires 324E, 324F courbes et cintrées dans un plan perpendiculaire à son axe longitudinal X320, avec leurs concavités tournée vers le plan P301.

En d'autres termes, la portion 324E est délimitée par une surface concave 324A, suivant un plan perpendiculaire à l'axe X320, tournée vers le plan P301 et une surface convexe 324B, suivant ce plan à l'axe X320, tournée à l'opposé du plan P301. Ce plan est celui de la figure 10. Il en est de même pour la portion 324F pour laquelle les surfaces convexes et concaves ne sont pas représentées. Chaque portion intermédiaire 324E, 324F présente une épaisseur constante.

Chaque bras 320 est également courbe suivant un plan parallèle à son axe X320 avec sa concavité tournée vers le plan P301.

Ainsi chaque bras 320 présente une double concavité.

La structure externe 312 comprend à chaque sommet 340, 342, 344 du triangle qu'elle forme des orifices de passage de vis ou rivets de fixation 352.

Les organes de fixation 318 sont en saillie vers l'axe central Z31 0 des bras 320 et plus précisément des zones d'appui 354.

Ainsi, plusieurs dispositifs de ressort 310 peuvent être assemblés les uns avec autres avec leurs axes centraux Z31 0 confondus par exemple par rivetage. Dans ce mode de réalisation, la zone d'appui 354 est une zone de contact entre deux bras 320 positionnés l'un au-dessus de l'autre, suivant l'axe Z31 0, et appartenant à des dispositifs de ressort 310 distincts.

En variante, le nombre de bras 320 du dispositif de ressort 310 est différent de trois. Selon une autre variante, le nombre d'organes de fixation 318 est différent de trois.

Comme représenté à la figure 11, ou on utilise les mêmes références, que pour le deuxième mode de réalisation et quel que soit le mode de réalisation, la portion intermédiaire 124 d'un bras peut présenter une portion centrale cintrée, définie entre une surface concave 124A et une surface convexe 124B, ainsi qu'une ou deux ailes latérales planes 124C et 124D. La résistance au flambage est encore améliorée.

Le rapport R20 calculé comme pour le premier mode de réalisation est également valable pour les trois autres modes de réalisation. Ainsi on définit des rapports calculés de manière analogue à ce qui a été présenté pour le premier mode de réalisation. Ces rapports sont compris entre 0,03 et 0,4 de préférence entre 0,05 et 0,1.

Le dimensionnement du dispositif de ressort 10, 110, 210, 310 permet d'obtenir une limite en contrainte de traction pour la structure externe 12, 112, 212, 312 identique à la limite de contrainte en compression pour la structure interne 14, 114, 214, 314. Ce dimensionnement permet l'accumulation d'une énergie optimale dans le dispositif de ressort 10, 110, 210, 310.

Par ailleurs, la forme courbe et cintrée dans un plan perpendiculaire à l'axe longitudinal X20, X120, X220, X320, des bras 20, 120, 220, 320 permet d'optimiser la transmission de l'effort de compression et donc d'avoir une meilleure résistance au flambage des bras 320, c'est à dire d'avoir des sollicitations en compression des bras 320 sans flambage.

De plus la double concavité des bras 320 améliore la résistance au flambage et la forme courbe et cintrée de chaque bras 320 parallèlement à son axe longitudinal permet d'améliorer encore la transmission de l'effort de compression, particulièrement lorsque deux dispositifs de ressort 310 sont associés avec leurs axes centraux Z310 confondus.

Comme expliqué pour le premier mode de réalisation, dans tous les modes de réalisation présentés, l'épaisseur moyenne W10, W110, W210, W310 des parties constitutives du dispositif de ressort 10, 110, 210, 310, mesurée parallèlement à l'axe central Z10, Z110, Z210, Z310 est inférieure à la largeur L20, L120, L220, L320 des bras 20, 120, 220, 320, et à la largeur maximale L12, L112, L212, L312, de la structure externe 12, 112, 212, 312. De plus pour les trois premiers modes de réalisation, l'épaisseur moyenne est inférieur à la largeur maximale L18, L118, L218 de la partie centrale 18, 118, 218. Ceci permet des sollicitations de compression sans flambage au niveau des bras 20, 120, 220, 320 et de la partie centrale 18, 118, 218.

Le dispositif 10, 110, 210, 310 est monobloc et réalisé en métal, par exemple en acier de type : XC 75, 50 Cr V4, 45SCD6, INOX austénitiques, martensitiques, à durcissement structural comme les 17-7 Ph, super alliage d'Inconel, Nimonic, Hastelloy, Monel, ou en Titane, CuBe2, matériaux composites et tout matériaux possédant des propriétés permettant la réalisation de ressorts en particulier.

Le dispositif de ressort 10, 110, 210, 310 est fabriqué par usinage, estampage matriçage et/ou emboutissage d'une plaque d'acier à ressort.

En variante, le dispositif de ressort 10, 110, 210, 310 est fabriqué par tissage, moulage, injection et/ou usinage de matériau composite.

Selon une autre variante, le dispositif de ressort 10, 110, 210, 310 est usiné dans la masse d'une plaque de métal, notamment d'acier à ressort.

Selon une autre variante, le dispositif de l'invention peut être réalisé en matériau synthétique.

Selon une autre variante les portions intermédiaires 24, 124, 224, 324E 324F présentent une concavité, dans un plan perpendiculaire à l'axe X20, X120, X220, X320, tournée à l'opposé du premier plan P1, P101, P301.

## Revendications

1. Dispositif de ressort (10 ; 110 ; 210 ; 310) comprenant une structure externe (2 ; 112 ; 212 ; 312), une structure interne (14 ; 114 ; 214 ; 314) et une structure intermédiaire (19 ; 119 ; 219 ; 319) comprenant des bras (20 ; 120 ; 220 ; 320) reliant la structure externe et la structure interne et s'étendant chacun selon un axe longitudinal (X20 ; X120 ; X220 ; X320), la structure interne (14 ; 114 ; 214 ; 314) et la structure externe (12 ; 112 ; 212 ; 312) s'étendant selon des plans distincts (P1 , P2 ; P101, P102 ; P301, P302) en étant disposées autour d'un axe central (Z10; Z110 ; Z210 ; Z310), chaque bras comprenant au moins une portion intermédiaire (24 ; 124 ; 224 ; 324E, 324F), **caractérisé en ce que** chaque portion intermédiaire (24 ; 124 ; 224 ; 324E, 324F) de chaque bras (20 ; 120 ; 220 ; 320) est cintrée et présente une concavité au moins dans un plan (III ; VII) perpendiculaire à un axe longitudinal (X20 ; X120 ; X220 ; X320) du bras.

2. Dispositif de ressort selon la revendication 1, **caractérisé en ce que** dans le plan perpendiculaire (III ; VII) à son axe longitudinal (X20 ; X120 ; X220 ; X320), chaque portion intermédiaire (24 ; 124 ; 224 ; 324E, 324F) de chaque bras (20 ; 120 ; 220 ; 320) présente une concavité tournée vers le plan (P1 ; P101 ; P301) dans lequel s'étend la structure externe (12 ; 112 ; 212 ; 312).

3. Dispositif de ressort selon l'une des revendications précédentes, **caractérisé en ce qu'**un rapport (R20) ayant :
- comme dénominateur une largeur (L20 ; L120 ; L220 ; L320) de la portion intermédiaire (24 ; 124 ; 224 ; 324E, 324F) d'un bras (20 ; 120 ; 220 ; 320), mesurée perpendiculairement à son axe longitudinal (X20 ; X120 ; X220 ; X320) et parallèlement au plan (P1 ; P101 ; P301) dans lequel s'étend la structure externe (12 ; 112 ; 212 ; 312),
- comme numérateur, une distance maximale (D20), mesurée suivant un axe perpendiculairement à l'axe longitudinal (X20 ; X120 ; X220 ; X320) et au plan dans lequel s'étend la structure externe (12 ; 112 ; 212 ; 312), entre d'une part, une droite (A20) le long de laquelle est mesurée la largeur et, d'autre part, un point appartenant (H) à la portion intermédiaire (24 ; 124 ; 224 ; 324E, 324F),
est compris entre 0,03 et 0,4 de préférence entre 0,05 et 0,1.

4. Dispositif de ressort selon l'une des revendications précédentes, **caractérisé en ce que** l'épaisseur moyenne (W10 ; W110 ; W210 ; W310) des parties (16, 18, 20 ; 116, 118, 120 ; 216, 218, 220 ; 316, 318, 320) constitutives du dispositif de ressort mesurée globalement parallèlement à l'axe central (Z10 ; Z110 ; Z210 ; Z310) est inférieure à la largeur (L20 ; L120 ; L220 ; L320) des bras (20 ; 120 ; 220 ; 320) mesurée perpendiculairement à chaque axe longitudinal (X20 ; X120 ; X220 ; X320) et parallèlement au plan (P1 ; P101 ; P301) dans lequel s'étend la structure externe (12 ; 112 ; 212 ; 312), et à la largeur (L12 ; L112 ; L212 ; L312) de la structure externe (12 ; 112 ; 212 ; 312) mesurée globalement radialement à l'axe central (Z10 ; Z110 ; Z210 ; Z310).

5. Dispositif de ressort selon l'une des revendications précédentes, **caractérisé en ce que** la structure interne (14) comprend une partie centrale (18) de révolution, centrée sur l'axe central (Z10), reliée à la structure externe (12) par l'intermédiaire des bras (20), et **en ce que** la partie centrale est courbe (18) radialement à l'axe central (Z10) avec sa concavité tournée vers le plan (P1) dans lequel s'étend la structure externe (12).

6. Dispositif de ressort selon l'une des revendications 1 à 4, **caractérisé en ce que** la structure interne (114 ; 214) comprend une partie centrale (118 ; 218), relié à la structure externe (112 ; 212) par l'intermédiaire des bras (120 ; 220), et **en ce que** la partie centrale (118 ; 218) comprend plusieurs segments (1182, 1184, 1186 ; 2182, 2184, 2186, 2188) et a une forme globalement cylindrique, chaque segment étant courbe, parallèlement et perpendiculairement à un axe (X1182, X1184, X1186 ; X2182, X2184, X2186, X2188) le traversant parallèlement à son côté présentant la plus grande longueur, avec sa concavité tournée vers le plan (P101) dans lequel s'étend la structure externe (112 ; 212).

7. Dispositif de ressort selon l'une des revendications 5 ou 6, **caractérisé en ce que** l'épaisseur moyenne (W10 ; W110 ; W210) des parties (16, 18, 20 ; 116, 118, 120 ; 216, 218, 220 ; 316, 318, 320) constitutives du dispositif de ressort mesurée globalement parallèlement à l'axe central (Z10 ; Z110 ; Z210) est inférieure à la largeur (L18 ; L118 ; L218) de la partie centrale (18 ; 118 ; 218) mesurée globalement radialement à l'axe central.

8. Dispositif de ressort selon l'une des revendications 1 à 4, **caractérisé en ce que** chaque bras (320) est courbe parallèlement à son axe longitudinal (X320), avec sa concavité tournée vers le plan (P301) dans lequel s'étend la structure externe

9. Dispositif de ressort selon la revendication 8, **caractérisé en ce que** la structure interne (314) comprend des organes de fixation (318), et **en ce que** la structure externe (312) comprend des moyens de fixation (352), de manière à ce que plusieurs dispositifs de ressort (310) puissent être assemblés les uns aux autres avec leurs axes centraux (Z310) confondus.

10. Procédé de fabrication d'un dispositif de ressort (10 ; 110 ; 210 ; 310), selon l'une des revendications 1 à 9, **caractérisé en ce que** le dispositif est fabriqué par usinage, estampage, matriçage et/ou emboutissage d'une plaque d'acier à ressort ou tissage, moulage, injection et/ou usinage de matériau composite.
